# DEMANDE DE BREVET EUROPEEN

(11) **EP 2 269 866 A2**
(43) Date de publication de la demande: **05.01.2011**
(21) Numéro de dépôt: 10305664.4
(22) Date de dépôt: 22.06.2010
(51) Int. Cl.: B60N 2/56

(54) **Siège automobile équipé d'un dispositif de circulation d'air**

(30) Priorité: 03.07.2009 FR 0903319
(71) Demandeur: Renault S.A.S., 92100 Boulogne-Billancourt (FR)
(72) Inventeur: Cornet, Nathalie, 78960, VOISINS LE BRETONNEUX (FR)

(57) **Abrégé**

L'invention concerne un siège (1) automobile composant une structure interne en mousse (30) recouverte d'un complexe textile (20) et équipé d'un dispositif de circulation d'air, dans lequel ledit dispositif de circulation d'air comprend au moins une chambre (11) formée dans la mousse du siège qui comporte une ouverture (13A) débouchant sur ledit complexe textile et qui loge une membrane adaptée à être au moins partiellement dépecée entre deux positions extrêmes par application d'une tension électrique entre deux électrodes de cette membrane, pour faire varier le volume de la chambre compris entre ladite ouverture et ladite membrane.

## Description

### DOMAINE TECHNIQUE AUQUEL SE RAPPORTE L'INVENTION

La présente invention concerne de manière générale un siège automobile comportant une structure interne en mousse recouverte d'un complexe textile et équipé d'un dispositif de circulation d'air.

### ARRIERE-PLAN TECHNOLOGIQUE

Les siège automobiles jouent un rôle important dans le confort du conducteur et de ses passagers.

Par temps chaud ou en situation de stress, la température corporelle des utilisateurs s'élève et ils transpirent : la transpiration s'accumule dans les sièges, créant une zone de contact humide.

Le confort thermique et hygrométrique du conducteur est alors dégradé, ce qui peut entraîner une baisse de son attention et mettre ainsi en péril la sécurité du véhicule et de ses occupants.

C'est pourquoi, dans certains sièges de véhicule, il est prévu un dispositif de circulation d'air qui permet d'évacuer une partie de l'humidité retenue dans le siège, et d'améliorer ainsi le confort des utilisateurs.

Ces dispositifs de circulation d'air comportent généralement un système de ventilation assurant une mise en mouvement de l'air.

Ces dispositifs de circulation d'air présentent de nombreux inconvénients. Ils sont encombrants et lourds, ce qui rend leur installation dans le siège difficile, et ils sont également coûteux, ce qui limite leur utilisation. Enfin, certains peuvent être bruyants, ce qui nuit par ailleurs au confort des utilisateurs.

### OBJET DE L'INVENTION

Afin de résoudre les inconvénients précités, on propose selon l'invention un siège automobile comportant un dispositif de circulation d'air peu encombrant, économique et peu bruyant.

A cet effet, on propose selon l'invention un siège pour automobile tel que défini en introduction, dans lequel ledit dispositif de circulation d'air comprend au moins une chambre formée dans la mousse du siège qui comporte une ouverture débouchant sur ledit complexe textile et qui loge une membrane adaptée à être au moins partiellement déplacée entre deux positions extrêmes par application d'une tension électrique entre deux électrodes de cette membrane, pour faire varier le volume de la chambre compris entre ladite ouverture et ladite membrane.

Ce dispositif de circulation est peu encombrant, peu coûteux et peut être facilement introduit dans le siège. Il est en outre silencieux et ne perturbe pas la concentration du conducteur.

Selon d'autres caractéristiques avantageuses et non-limitatives de l'invention :
- ledit dispositif comporte une pluralité desdites chambres ;
- la membrane logée dans chaque chambre s'étend parallèlement à la surface dudit complexe textile recouvrant l'ouverture de la chambre correspondante et est adaptée à se déformer selon une direction perpendiculaire à cette surface ;
- la membrane de chaque chambre est maintenue par des moyens de maintien à mi-hauteur de la chambre correspondante ;
- la membrane de chaque chambre est connectée à un générateur de tension ;
- les membranes de toutes les chambres sont connectées à un unique générateur de tension ;
- lesdites chambres sont disposées dans une région du siège correspondant au bas du dos de l'utilisateur.

### DESCRIPTION DETAILLEE D'UN EXEMPLE DE REALISATION

La description qui va suivre, en regard des dessins annexés, donnée à titre d'exemple non limitatif, fera bien comprendre en quoi consiste l'invention et comment elle peut être réalisée.

Sur les dessins annexés ;
- la figure 1 est une vue en perspective d'un siège pour automobile selon invention ;
- la figure 2 est une vue de détail en coupe d'une région A de la figure 1 ;
- les figures 3 et 4 sont des vues de détail en coupe de la région B de la figure 2 dans lesquelles la membrane se trouve dans différentes posions.

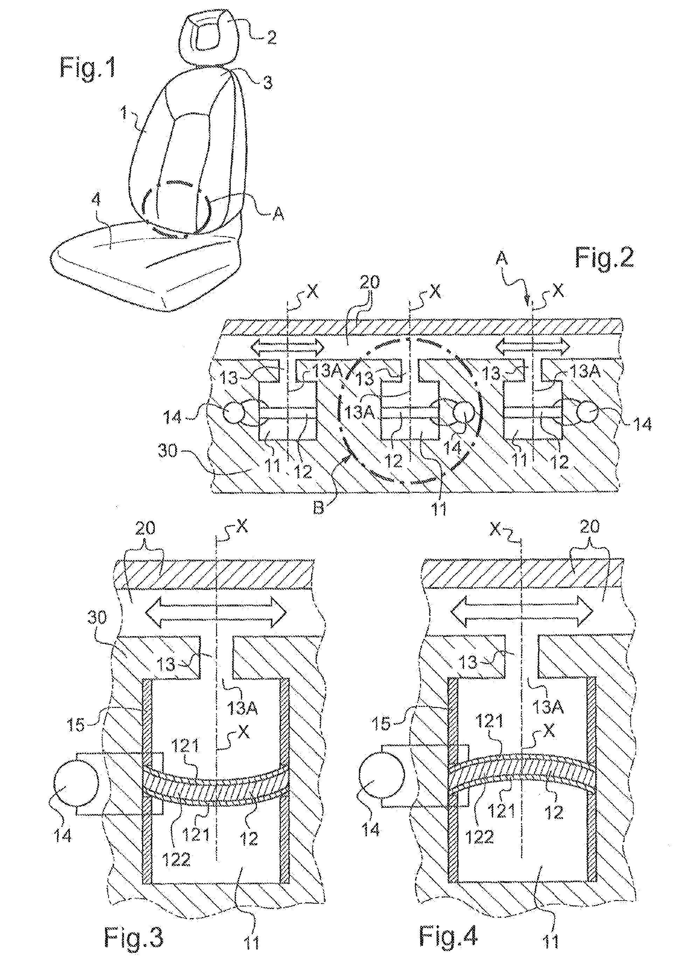

On a représenté sur la figure 1 un siège 1 pour véhicule automobile. Ce siège 1 comporte un dossier 3 surmonté d'un appui-tëte 2 prolongé par une assise 4. Il est destiné à être monté dans l'habitacle d'un véhicule automobile.

Ce fauteuil comporte une structure interne rigide (non représentée) enrobée d'une épaisseur de mousse 30 (figure 2).

Cette épaisseur de mousse 30 est recouverte d'un complexe textile 20. Ce complexe textile 20 peut comporter différentes couches de matériaux textiles et de mousses.

Sur l'exemple représenté sur les figures 2 à 5, le complexe textile 20 comporte deux couches de matériaux.

Selon l'invention, de manière remarquable, l'épaisseur de mousse 30 accueille une pluralité de chambres 11 formées à l'intérieur de la mousse 30.

Chaque chambre 11 comporte une ouverture 13A qui débouche par un conduit 13 sur la face externe de la mousse 30 recouverte par le complexe textile 20.

Ces chambres 11 présentent ici une forme parallèlepipédique. En variante, elle peuvent présenter une forme cylindrique, ou quelconque, De préférence, cette chambre 11 présente un axe de symétrie perpendiculaire à la surface du complexe textile 20 recouvrant cette ouverture 13A, appelé axe longitudinal X.

Chaque chambre 11 loge une membrane 12 qui s'étend parallèlement à la surface dudit complexe textile 20 recouvrant l'ouverture 13A de la chambre 11 correspondante, ou en d'autre termes parallèlement à la face externe de la mousse 30.

La membrane 12 de chaque chambre 11 présente une section au moins égale à la section de la chambre correspondante dans la direction parallèle à la surface du complexe textile 20.

Elle est de préférence maintenue par des moyens de maintien à mi-hauteur dans la chambre 11 correspondante.

Ces moyens de maintien comportent par exemple deux cadres 15 de maintien rigides placés de part et d'autre de la membrane 12.

En outre, le bord périphérique de cette membrane peut être logé dans une rainure (non représentée) des faces latérales délimitant la chambre, cette rainure étant dotée de joints adaptés pour ne pas endommager la membrane lors de ces mouvements.

La membrane 12 comporte, dans son épaisseur, une plaque centrale isolante 122 prise en sandwich entre deux électrodes 121. Les deux électrodes 121 et la plaque centrale 122 sont solidaires.

La plaque centrale 122 est ici réalisée en matériau polymère électro-actif, par exemple en silicone, en polyuréthane ou en polyacrylate.

Les électrodes 121 sont en métal ou en composé conducteur électrique déposé par toute méthode connue de l'homme du métier sur chaque face opposée de la plaque centrale 122 isolante.

En variante, la plaque centrale de la membrane peut être réalisée en matériau piézo-électrique, et les électrodes conductrices sont collées ou piquées de part et d'autre de la plaque centrale, sur chacune de ses faces,

La membrane 12 est adaptée à être au moins partiellement déplacée entre deux positions extrêmes par application d'une tension électrique entre ses deux électrodes 12, pour faire varier le volume de la chambre 11 correspondante compris entre ladite ouverture 13A et ladite membrane 12.

La membrane 12 est plane lorsqu'aucune tension n'est appliquée entre ses électrodes 121 (figure 2).

Lorsqu'une tension est appliquée entre les deux électrodes 121, les charges électriques présentes dans la membrane 12 se déplacent suivant le champ électrique appliqué, ce qui induit une déformation de la membrane 12 de type déplacement selon une direction perpendiculaire au plan dans lequel s'étend la membrane 12 lorsqu'aucune tension n'est appliquée entre ses électrodes 121.

La plaque centrale 122 étant ainsi comprimée transversalement, elle a tendance à s'étendre dans le plan dans lequel elle s'étend lorsqu'aucune tension n'est appliquée entre ses électrodes 121. Cette expansion étant limitée par le contour de la chambre 11, et la position de la membrane 12 selon la direction de l'axe longitudinal X de la chambre 11 étant fixée par les cadres 15, la membrane 12 se déforme selon une direction perpendiculaire au plan dans lequel elle s'étend lorsqu'aucune tension n'est appliquée entre ses électrodes 121. Cette direction est ici avantageusement parallèle à la direction de l'axe longitudinal X de la chambre 11.

En l'occurrence, la membrane 12 s'incurve : une portion de la membrane 12 se déplace selon la direction perpendiculaire au plan dans lequel s'étend la membrane lorsqu'aucune tension n'est appliquée entre ses électrodes 121.

Sous l'effet d'une tension alternative, ladite portion de la membrane se déplace alternativement vers l'ouverture 13A de la chambre 11 ou loin de cette ouverture 13A. En conséquence, la membrane 12 s'incurve alternativement en se rapprochant de ladite ouverture 13A ou en s'éloignant de ladite ouverture 13A, entre deux positions extrêmes représentées sur les figures 3 et 4.

Comme le montrent les figures 3 et 4, le volume de la chambre 11 compris entre ladite ouverture 13A et ladite membrane 12 varie lorsque la membrane 12 se déplace entre lesdites deux positions extrêmes : par rapport au volume de la chambre 11 compris entre la membrane 12 et l'ouverture 13A lorsque la membrane 12 est plane, c'est-à-dire lorsqu'aucune tension n'est appliquée entre les électrodes 121, ce volume diminue lorsque la membrane s'incurve vers l'ouverture 13A, et il diminue lorsque la membrane 12 s'incurve loin de l'ouverture 13A.

Cette variation de volume implique alternativement une sortie d'air de la chambre 11 lorsque la membrane est incurvée vers l'ouverture 13A et une entrée d'air dans la chambre 11 lorsque la membrane est incurvée loin de l'ouverture 13A.

Ce mouvement entrant et sortant de l'air crée une circulation d'air dans la structure du complexe textile 20 recouvrant couverture 13A de chaque chambre 11.

Cette circulation d'air favorise l'évaporation de l'eau contenue dans le complexe textile 20.

Dans l'exemple représenté sur la figure 2, la membrane 12 de chaque chambre 11 est connectée à un générateur de tension 14 distinct.

En variante, les membranes de toutes les chambres sont connectées à un unique générateur de tension.

Ces générateurs de tension 14 sont par exemple également logés dans la mousse 30 du siège 1.

Avantageusement, les chambres 11 sont disposés dans le dossier 3 et l'assise 4 du siège 1, au moins dans les régions correspondant au bas du dos de l'utilisateur. Le transpiration accumulée dans ces régions est ainsi évacuée de manière efficace et silencieuse par la circulation d'air générée dans le complexe textile 20 du siège 1.

La présente invention n'est nullement limitée aux modes de réalisation décrits et représentés mais l'homme du métier saura y apporter toute variante conforme à son esprit.

## Revendications

1. Siège (1) automobile comportant une structure interne en mousse (30) recouverte d'un complexe textile (20) et équipé d'un dispositif de circulation d'air, **caractérisé en ce que** ledit dispositif de circulation d'air comprend au moins une chambre (11) formée dans la mousse (30) du siège (1) qui comporte une ouverture (13A) débouchant sur ledit complexe textile (20) et qui loge une membrane (12) adaptée à être au moins partiellement déplacée entre deux positions extrêmes par application d'une tension électrique entre deux électrodes (121) de cette membrane (12), pour faire varier le volume de la chambre (11) compris entre ladite ouverture (13A) et ladite membrane (12).

2. Siège (1) selon la revendication précédente, dans lequel ledit dispositif comporte une pluralité desdites chambres (11).

3. Siège (1) selon l'une des revendications précédentes, dans lequel la membrane (12) logée dans chaque chambre (11) s'étend parallèlement à la surface dudit complexe textile (20) recouvrant l'ouverture (13A) de la chambre (11) correspondante et est adaptée à se déformer selon une direction perpendiculaire à cette surface.

4. Siège (1) automobile selon l'une des revendications précédentes, dans lequel la membrane (12) de chaque chambre (11) est maintenue par des moyens de maintien (15) à mi-hauteur de la chambre (11) correspondante.

5. Siège (1) automobile selon l'une des revendications 2 à 4, dans lequel la membrane (12) de chaque chambre, (11) est connectée à un générateur de tension (14).

6. Siège automobile selon l'une des revendications 2 à 4, dans lequel les membranes de toutes les chambres sont connectées à un unique générateur de tension.

7. Siège (1) automobile selon l'une des revendications précédentes, dans lequel lesdites chambres (11) sont disposées dans une région du siège (1) correspondant au bas du dos de l'utilisateur.
